## Europäisches Patentamt
## European Patent Office
## Office européen des brevets

(19)

(11) Veröffentlichungsnummer: **0 119 367**
**A1**

(12) # EUROPÄISCHE PATENTANMELDUNG

(21) Anmeldenummer: 83710063.5

(22) Anmeldetag: 07.09.83

(51) Int. Cl.³: **B 60 R 19/02**, B 60 Q 1/18

(30) Priorität: 17.03.83 DE 3309626

(43) Veröffentlichungstag der Anmeldung: 26.09.84
Patentblatt 84/39

(84) Benannte Vertragsstaaten: **AT CH FR GB LI NL SE**

(71) Anmelder: **WEGU Gummi- und Kunststoffwerke Walter Dräbing KG, Mündener Strasse 31, D-3500 Kassel (DE)**

(72) Erfinder: **Tönnies, Herbert, Eichenweg 4, D-3512 Reinhardshagen (DE)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

(54) **Stossstangenhorn.**

(57) Ein energieaufnehmendes, an der Stoßstange (1) von Kraftfahrzeugen zu befestigendes Stoßstangenhorn (4) besitzt einen Stoßfänger (6) aus elastisch nachgiebigem Material und eine Befestigungseinrichtung (10) für die Verbindung zwischen Stoßstangenhorn (4) und Stoßstange (1). Weiterhin ist eine Aufnahmeeinrichtung (11) zur Befestigung eines Scheinwerfers (12) vorgesehen. Die Aufnahmeeinrichtung (11) ist mit der Befestigungseinrichtung (10) starr verbunden. Die Befestigungseinrichtung (10) weist eine Distanzhülse (16) zum reproduzierbaren Aufbringen einer bestimmten Vorspannung des Stoßstangenhorns (4) zwischen Aufnahmeeinrichtung (11) und Stoßstange (1) auf.

EP 0 119 367 A1

Die Erfindung bezieht sich auf ein energieaufnehmendes, an der Stoßstange von Kraftfahrzeugen zu befestigendes Stoßstangenhorn, mit einem Stoßfänger aus elastisch-nachgiebigem Material und einer Befestigungseinrichtung für die Verbindung zwischen Stoßstangenhorn und Stoßstange und mit einer Aufnahmeeinrichtung zur Befestigung eines Scheinwerfers. Stoßstangenhörner sind im wesentlichen aus Gummi oder einem anderen elastisch-nachgiebigem Material bestehende Teile, die so auf die Stoßstange von Kraftfahrzeugen aufgesetzt werden, daß sie die am weitesten vorspringenden Punkte bilden, so daß z. B. beim Heranfahren auf eine Garagenwand die Stoßstangenhörner mit der Wand in Kontakt treten und dabei den Stoß abfangen.

Es ist ein Stoßstangenhorn der eingangs beschriebenen Art bekannt, welches nicht nur eine Befestigungseinrichtung zum Ansetzen an der Stoßstange, sondern gleichzeitig auch eine Aufnahmeeinrichtung zur Befestigung eines Scheinwerfers aufweist. Insbesondere Zusatzscheinwerfer werden oft auch nachträglich montiert, wobei die Aufgabe besteht, einerseits einen zulässigen und andererseits einen geeigneten Anbringungsort zu finden, der das Aussehen der Frontpartie eines Kraftfahrzeuges nicht nachteilig beeinträchtigt, sondern sich organisch einfügt. Das bekannte Stoßstangenhorn besitzt neben und unabhängig von der Befestigungseinrichtung die Aufnahmeeinrichtung für den Scheinwerfer in Form eines in den Stoßfänger aus elastisch-nachgiebigem Material einvulkanisierten Aufnahmedorns. Der Gelenkträger für den Scheinwerfer besitzt eine Schraube, die durch den Aufnahmedorn hindurchgesteckt und von der anderen Seite mit einer Mutter und einer Spannscheibe gesichert wird. Das Einvulkanisieren des Aufnahmedorns stellt einen kostenintensiven Herstellungsschritt dar. Die Befestigungseinrichtung besitzt einen einvulkanisierten Bolzen, der nach rückwärts, der Stoßstange zugekehrt, aus dem Gummiteil herausschaut. Der Bolzen trägt ein Gewinde und durchsetzt die Stoßstange in einer entsprechenden Bohrung.

- 2 -

Er wird auf der Rückseite mit einer Mutter gegengezogen, so daß damit die Verbindung Stoßstange - Stoßstangenhorn gesichert ist. Die den Stoßfänger durchsetzende Bohrung zur Anordnung des einvulkanisierten Aufnahmedorns ist im verformbaren Bereich des Stoßfängers angeordnet und hat keine Verbindung zu dem Bolzen der Befestigungseinrichtung. Diese Lagerung des Scheinwerfers im nachgiebigen Material des Stoßstangenhorns bzw. des Stoßfängers wirkt sich insoweit nachteilig aus, als der Scheinwerfer während der Fahrt infolge auftretender Stöße und Kräfte hin- und herschwingt, wodurch sie die Ausleuchtung der Fahrbahn durch den Scheinwerfer verändert. Die Verbindung des Scheinwerfers zu dem Stoßstangenhorn und der Stoßstange ist nicht kraftschlüssig genug.

Weiterhin ist eine Scheinwerferbefestigung bekannt, die im wesentlichen aus einer Kombination von starren Haltern, Winkeln und Streben besteht, die einerseits an der Stoßstange befestigt werden und andererseits am Scheinwerfer angreifen. Diese Scheinwerferbefestigung ist zur Aufnahme von Stößen nicht geeignet und auch nicht vorgesehen. Neben der fehlenden Stoßaufnahmefunktion besteht der weitere Nachteil, daß die Streben oft relativ weit ausladend gestaltet werden müssen, so daß durch ihre Ausladung die Schwingungsamplitude des Scheinwerfers vergrößert wird. Dem läßt sich durch eine komplizierte Versteifung der Halter und Streben bis zu einem gewissen Grade begegnen, jedoch ist diese Versteifung mit den Haltern und Streben sichtbar und beeinträchtigt damit das Aussehen des Kraftfahrzeuges.

Es ist schließlich auch noch bekannt geworden, den Scheinwerfer unmittelbar an der Stoßstange zu befestigen und auf diese aufzusetzen. Dies ist jedoch insofern ungünstig, als die Anordnung des Scheinwerfers in den meisten Fällen zu tief erfolgt, wodurch neben der vergleichsweise schlechten Ausleuchtung auch noch eine Beschädigungsgefahr für den Scheinwerfer beim Auffahren besteht.

- 3 -

Der Erfindung liegt die Aufgabe zugrunde, ein Stoßstangenhorn der eingangs beschriebenen Art, also mit Stoßaufnahmefunktion einerseits und Trägerfunktion für einen Scheinwerfer andererseits, so weiterzubilden, daß der Scheinwerfer vergleichsweise weniger zu Schwingungen neigt.

Erfindungsgemäß wird dies dadurch erreicht, daß die Aufnahmeeinrichtung mit der Befestigungseinrichtung starr verbunden ist, und daß die Befestigungseinrichtung eine Distanzhülse zum reproduzierbaren Aufbringen einer bestimmten Vorspannung des Stoßstangenhorns zwischen Aufnahmeeinrichtung und Stoßstange aufweist. Aufnahmeeinrichtung und Befestigungseinrichtung sind starr miteinander verbunden, so daß eine durchgehende starre kraftschlüssige Abstützung zwischen dem Scheinwerfer und der Stoßstange besteht. Die Aufnahmeeinrichtung und die Befestigungseinrichtung durchsetzen im wesentlichen das Stoßstangenhorn und dienen dazu, eine bestimmte Vorspannung in dem elastisch-nachgiebigen Material des Stoßstangenhorns zwischen der Aufnahmeeinrichtung und der Stoßstange, also etwa im rückwärtigen Teil des Stoßstangenhorns zu erzeugen. Infolge der starren Verbindung in Kombination mit der Vorspannung ist es entbehrlich, Teile der Aufnahmeeinrichtung in dem Gummikörper des Stoßstangenhorns einzuvulkanisieren. Da die Vorspannung sowieso aufgebracht wird, genügt ein Einpressen bzw. Einstecken von Teilen der Aufnahmeeinrichtung in entsprechende Durchbrechungen des Stoßstangenhorns. Die erfindungsgemäße Ausbildung erfüllt mehrere Funktionen: Zum einen wird ein ordnungsgemäßer und fester Sitz des Stoßstangenhorns an der Stoßstange selbst erreicht. Weiterhin ist der Scheinwerfer starr an der Stoßstange gelagert. Das Stoßstangenhorn übernimmt in seinem Stoßfängerteil durchaus Stoßaufnahmefunktion, und zwar ohne die Anordnung des Scheinwerfers zu beeinträchtigen.

- 4 -

Die Befestigungseinrichtung ist vorzugsweise mit der Aufnahmeeinrichtung über ein Gewinde verschraubt. Da die Befestigungseinrichtung und die Aufnahmeeinrichtung zueinander etwa rechtwinklig
angeordnet sind, ist damit gleichzeitig eine unverlierbare Aufnahme zwischen den beiden Einrichtungen sichergestellt. Die Anordnung eines solchen Gewindes stellt die starre Verbindung her
und bietet darüberhinaus die Möglichkeit, entsprechende Vorspannungen aufzugeben.

Die Befestigungseinrichtung kann durch die Aufnahmeeinrichtung
hindurch bis in den Bereich des Stoßfängers verlängert sein; im
Bereich dieser Verlängerung ist eine Spanneinrichtung zum Aufbringen einer stabilisierenden Vorspannung auf den Stoßfänger vorgesehen. Durch diese Ausbildung ist es nicht erforderlich, daß die
Aufnahmeeinrichtung sich von oben nach unten durchgehend durch
das Stoßstangenhorn erstreckt. Die Aufnahmeeinrichtung kann vielmehr vergleichsweise kürzer ausgebildet werden, so daß der untere
Teil des Stoßstangenhorns anderen Zwecken angepaßt werden kann.
Durch die Verlängerung der Befestigungseinrichtung nach vorn
tritt ein Stabilisierungseeffekt im rückwärtigen Teil des Stoßstangenhorns ein. Weiterhin wird durch diese Ausbildung verhindert, daß beim Anziehen der Befestigungseinrichtung sich die Aufnahmeeinrichtung im Gummiteil des Stoßstangenhorns unter Winkelabweichung verlagert. Stoßfängerfunktion und Aufnahmefunktion für
den Scheinwerfer werden damit im Stoßstangenhorn örtlich getrennt,
wobei sich die stabilisierende Wirkung im Bereich der Befestigungs- und Aufnahmeeinrichtung gleichzeitig vorteilhaft auf den
Stoßfänger auswirkt.

Das Stoßstangenhorn kann auf seiner, der Stoßstange zugekehrten
Seite eine aus einem umlaufenden, in nicht vorgespanntem Zustand
vorstehenden Rand und einer Mittelfläche gebildete Kontaktfläche
aufweisen. Durch diesen vorstehenden umlaufenden Rand wird eine
Anpassung an verschiedene Stoßstangenformen erzielt. Andererseits ist der umlaufende Rand auch auf die Länge der Distanzhüle abgestimmt, so daß nach dem Anziehen der Befestigungseinrichtung der notwendige feste Sitz erreicht wird. Der Anziehvorgang ist beendet, wenn der durch die Distanzhülse zur Verfügung gestellte Weg verschwunden ist. Gleichzeitig ist der umlaufende Rand dann so zusammengedrückt worden, daß er zumindest in einigen Bereichen der Stoßstange in die Ebene der Mittelfläche kommt.

Der Stoßfänger weist zweckmäßig im Anschluß an die Spanneinrichtung eine die Eigenschaften des Stoßfängers mitbestimmende Ausnehmung auf. Diese Ausnehmung bildet einen Hohlraum, so daß in Verbindung mit den übrigen Bereichen des Stoßfängers gleichsam eine Gummihohlfeder geschaffen ist, die sich zur Aufnahme von Stößen beim Auffahren besonders gut eignet. Im vorderen Bereich ist also das Stoßstangenhorn gezielt verformbar, während es im hinteren Bereich durch die verschiedenen Vorspannungen stabilisiert ist.

Für die Spanneinrichtung und die Befestigungseinrichtung kann zweckmäßig eine gemeinsame durchgehende Schraube vorgesehen sein, deren Schraubenkopf eine den Querschnitt der Ausnehmung abdeckende Spannscheibe trägt, einen in eine Durchbrechung im Stoßstangenhorn eingepreßten Aufnahmedorn über das Gewinde durchsetzt und die Distanzhülse durchsetzend sich durch die Stoßstange erstreckt. Damit wird eine einzige Schraube dazu benutzt, neben der starren Befestigung der Aufnahmeeinrichtung zwei an unterschiedlicher Stelle wirkende Vorspannungen auf das Stoßstangenhorn aufzubringen. Die Vorspannung zwischen dem Schraubenkopf bzw. der Spannscheibe und der Aufnahmeeinrichtung kann dabei schon herstellerseitig aufgebracht werden, während die zweite Vorspannung durch das Festziehen der Befestigungseinrichtung erst bei der Montage wirksam wird.

Der eingepreßte Aufnahmedorn kann auf seiner der Distanzhülse zugekehrten Seite eine Anlagefläche für die eine Stirnseite der Distanzhülse aufweisen. Damit ist gleichzeitig sichergestellt, daß die Vorspannkräfte einwandfrei zwischen den Teilen übertragen werden und der Aufnahmedorn seinen festen unverrückbaren Sitz im Stoßstangenhorn erhält, obwohl er nur in dieses eingepreßt und nicht einvulkanisiert ist.

Der Aufnahmedorn kann ein axial angeordnetes Innengewinde zur Aufnahme einer Sockelschraube eines am Scheinwerfer angreifenden Gelenkträgers aufweisen. Die Sockelschraube ist konterbar in dem Aufnahmedorn gelagert. Die Feststellung erfolgt durch eine auf der Sockelschraube sitzende Mutter gegen eine Unterlagsscheibe, die ebenfalls im Stoßstangenhorn eingepreßt den Aufnahmedorn nach oben abschließt.

Die Befestigungseinrichtung ist auf halber Höhe der Kontaktfläche angeordnet, so daß das Stoßstangenhorn damit abgestimmt auf die beim Auffahren angreifenden Kräfte zentrisch gehalten und gelagert ist.

Die Form für das Stoßstangenhorn ist in einer Ebene parallel zur Kontaktfläche durch die Achse der Aufnahmeeinrichtung geteilt. Dies dient nicht nur der Anordnung der Durchbrechung für die Aufnahmeeinrichtung, sondern ergibt auch eine Kombinationsmöglichkeit, den hinteren Bereich des Stoßstangenhorns in verschiedener Gestaltung, insbes. verschieden ausgebildeter Kontaktfläche an unterschiedliche Formen von Stoßstangen oder vorgesetzten Teilen anzupassen und den Stoßfänger andererseits unverändert bei diesen verschiedenen Ausführungsformen zu übernehmen, weil dieser in erster Linie hinsichtlich einer guten Energieaufnahme ausgebildet ist.

Die Erfindung wird anhand einiger bevorzugter Ausführungsbeispiele weiter beschrieben. Es zeigt:

Fig. 1    einen Vertikalschnitt durch das Stoßstangenhorn mit Scheinwerfer angesetzt an eine Stoßstange,

Fig. 2    einen Schnitt gemäß der Linie II-II in Fig. 1,

Fig. 3    einen Vertikalschnitt durch den Gummiteil des Stoßstangenhorns in einer weiteren Ausführungsform,

Fig. 4    eine Seitenansicht auf die Kontaktfläche des Stoßstangenhorns gemäß Fig. 3,

Fig. 5    eine Seitenansicht des Aufnahmedorns,

Fig. 6    eine Seitenansicht der Distanzhülse    und

Fig. 7    eine Seitenansicht einer Verschlußkappe für den Aufnahmedorn.

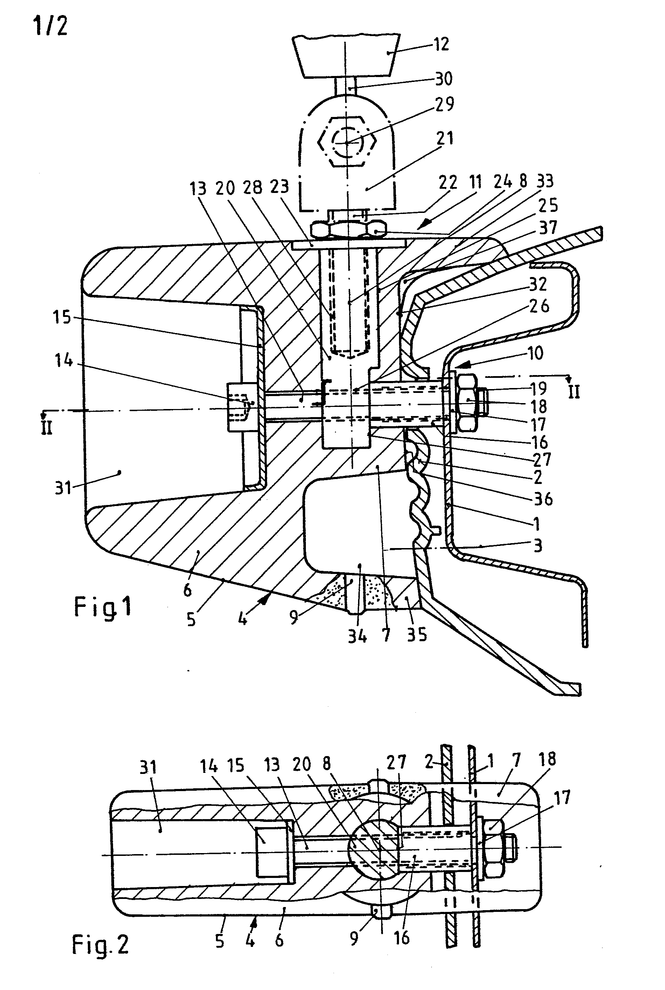

In Fig. 1 ist eine Stoßstange 1 eines Kraftfahrzeuges als entsprechend verformtes Stahlblechprofil dargestellt. Die Stoßstange 1 wird durch ein Kunststoffprofil 2 ergänzt, welches vor die Stoßstange 1 gesetzt und mit Hilfe von nur angedeuteten Schrauben 3 befestigt sein kann. Selbstverständlich kann auch nur eine Stoßstange 1 aus Metall vorgesehen sein.

Vor der Stoßstange 1 und zusätzlich in Anlage an dem Kunststoffprofil 2 ist ein Stoßstangenhorn 4 dargestellt, welches einen Formkörper 5 aus Gummi oder einem anderen elastisch-nachgiebigen Material als Hauptbestandteil aufweist, der in seinem vorderen Teil einen Stoßfänger 6 und in seinem hinteren, der Stoßstange 1 zugekehrten Teil einen Lagerkörper 7 bildet. Der Stoßfänger 6 geht in den Lagerkörper 7 etwa im Bereich einer Achse 8 über, in deren Ebene auch eine Trennaht 9 verläuft, die sich aufgrund einer hier geteilten Form für den Formkörper 5 ergibt.

Zu dem Stoßstangenhorn gehört weiterhin eine Befestigungseinrichtung 10 für die Befestigung des Stoßstangenhorns 4 an der Stoßstange 1 und eine Aufnahmeeinrichtung 11 für die Anbringung eines nur strichpunktiert angedeuteten Scheinwerfers 12. Die Befestigungseinrichtung 10 weist eine durchgehende Schraube 13 mit Schraubenkopf 14 und Spannscheibe 15 auf. Außerdem gehört zur Befestigungseinrichtung 10 noch eine Distanzhülse 16, eine Unterlagscheibe 17 und eine Mutter 18, jeweils abgestimmt auf ein Gewinde 19 an der Schraube 13. Die Aufnahmeeinrichtung 11 besitzt einen Aufnahmedorn 20, einen Gelenkträger 21, eine Sockelschraube 22, eine Unterlegscheibe 23 und eine Kontermutter 24. Der Aufnahmedorn 20 ist in eine Durchbrechung 25 zusammen mit der Unterlegscheibe 23 eingepresst. Der Aufnahmedorn 20 ist von der Schraube 13 durchsetzt und besitzt entsprechend dem Gewinde 19 ein Gewinde 26, so daß die Schraube 13 mit dem Aufnahmedorn 20 fest und starr verbunden ist. Der Aufnahmedorn 20 ist mit einer Anlagefläche 27 für die eine Stirnseite der Distanzhülse 16 versehen. Weiterhin besitzt der Aufnahmedorn 20 ein Innengewinde 28 zur Aufnahme der Sockelschraube 22. Der Gelenkträger 21 besitzt eine Drehachse 29, an der ein Fuß 30 des Scheinwerfers 12 angreift, der in seinem Winkel entsprechend einstellbar ist.

Der Stoßfänger 6 besitzt eine Ausnehmung 31, so daß durch die Wandung des Stoßfängers 6 gleichsam eine Gummihohlfeder zur Aufnahme von Kräften gebildet ist. Der Querschnitt der Ausnehmung 31 und die Spannscheibe 15 sind aneinander angepaßt.

Der Lagerkörper 7 des Formkörpers 5 besitzt auf seiner der Stoßstange 1 bzw. dem Kunststoffprofil 2 zugekehrten Seite eine Kontaktfläche 32, die in eine das Kunststoffprofil 2 auf seiner Oberseite überdeckende Deckleiste 33 übergeht. Im unteren Bereich ist der Lagerkörper 7 durch die Anordnung einer Ausnehmung 34 und einem Steg 35 vergleichsweise nachgiebig gestaltet, um hier eine bessere Anpassung an die jeweilige Formgebung der Stoßstange 1 bzw. des Kunststoffprofiles 2 zu gestatten. Die Kontaktfläche 32 besteht im einzelnen aus einer Mittelfläche 36 und
einem demgegenüber in Richtung auf die Stoßstange 1 vorstehenden
umlaufenden Rand 37, der sich beim Anziehen der Befestigungseinrichtung 10 mehr oder weniger verformt. Die Verformung kann dabei
so getroffen sein, daß der Rand 37 - je nach der Gestaltung des
Kunststoffprofiles 2 - bei angezogener Mutter 19 zumindest teilweise in die Ebene der Mittelfläche 36 zu liegen kommt.

Die Herstellung und Montage des Stoßstangenhorns 4 wird wie folgt
durchgeführt:
In den Formkörper 5 wird nach seiner Entformung zunächst der Aufnahmedorn 20 und die Unterlegscheibe 23 in die Durchbrechung 25
eingepresst. Die Schraube 13 wird mit eingelegter Spannscheibe 15
durch die Ausnehmung 31 gesteckt, wobei sie das Gewinde 26 des
Aufnahmedorns 20 durchsetzen, so weit eingeschraubt wird, bis
eine erste Vorspannung des Formkörpers 5 in dem Bereich zwischen
Aufnahmedorn 20 und Spannscheibe 15 bzw. Kopf 14 der Schraube 13
eintritt. Dieser Bereich des Formkörpers 5 wird damit stabilisierend vorgespannt, so daß sich der Stoßfänger 6 darauf nach vorn
aufbauen und abstützen kann.

Bei der Montage des Stoßstangenhorns 4 an der Stoßstange 1 wird
zunächst die Distanzhülse 16 auf den herausschauenden Teil des Gewindes 19 der Schraube 13 aufgesteckt und die Schraube 13 mit der
aufgesteckten Distanzhülse 16 durch entsprechende Durchbrechungen
des Kunststoffprofils 2 und der Stoßstange 1 von vorn nach hinten
hindurchgesteckt. Anschließend wird die Unterlagsscheibe 17 aufgebracht und die Mutter 19 aufgeschraubt. Die Mutter 19 wird nun
so lange festgezogen, bis der durch die Distanzhülse 16 festgelegte Weg verbraucht ist. Dabei legt sich der umlaufende Rand 37 an
das Kunststoffprofil 2 an. Es erfolgt eine Zusammendrückung des
Lagerkörpers 7, so daß der umlaufende Rand 37 zumindest stellenweise in die Ebene der Mittelfläche 36 verspannt wird. Damit
tritt gleichzeitig eine zweite Vorspannung bzw. eine Vorspannung an einer zweiten Stelle, und zwar zwischen dem Aufnahmedorn 20 und der Stoßstange 1 bzw. dem Kunststoffprofil 2 ein. Der Steg 35 legt sich ebenfalls an das Kunststoffprofil 2 an, ebenso wie die Deckleiste 33. Da sich die Distanzscheibe 16 mit ihrer der Stoßstange 1 zugekehrten Stirnfläche ebenfalls auf der Stoßstange 1 abstützt, ist letztendlich eine durchgehende starre Verbindung des Aufnahmedorns 20 bzw. der Aufnahmeeinrichtung 11 zu der Befestigungseinrichtung 10 und damit zu der Stoßstange 1 hergestellt. Beim Festziehen der Mutter 18 wird der Schraubenkopf 14 der Schraube 13 zweckmäßig festgehalten, damit sich während dieser Montagearbeit die Vorspannung zwischen der Spannscheibe 15 und dem Aufnahmedorn 20 nicht verändert.

Anschließend wird der Scheinwerfer 12 mit dem Gelenkträger 21 und der Sockelschraube 22 in den Aufnahmedorn eingeschraubt, mit der Mutter 24 gekontert und entsprechend eingestellt. Sollten die Platzverhältnisse hierfür nicht ausreichen, so erfolgt die Montage des Scheinwerfers 12 mit dem Aufnahmedorn 20 bevor die Befestigungseinrichtung 10 montiert und insbesondere die Mutter 18 festgezogen wird. Eine nachträgliche Ausrichtung und Einstellung ist aber in jedem Falle möglich.

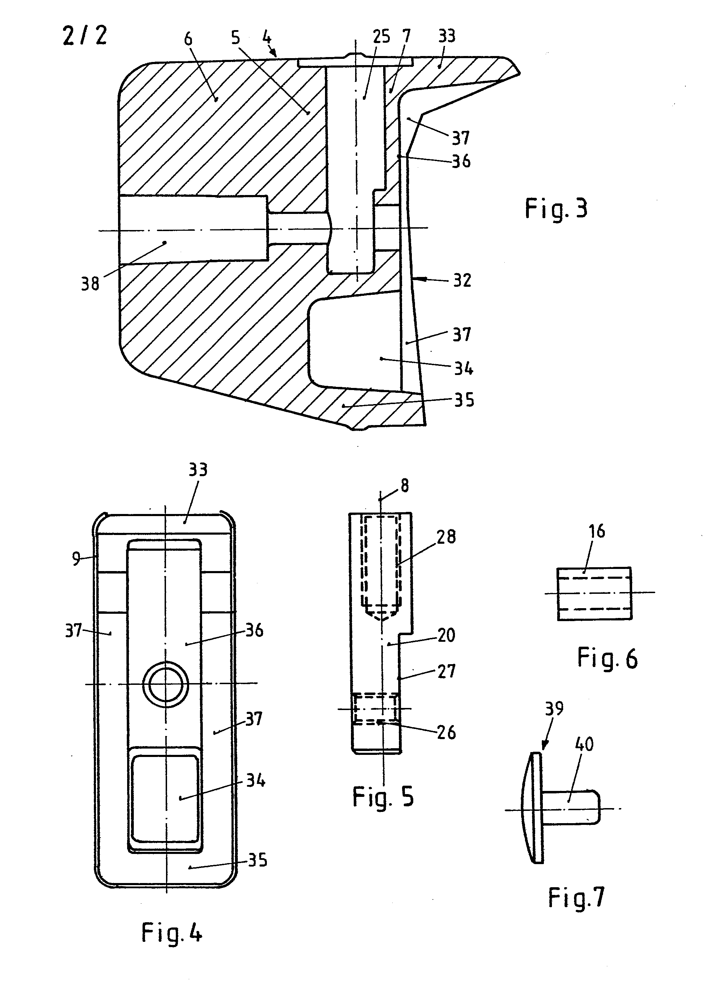

Fig. 3 zeigt den Formkörper 5 des Stoßstangenhorns 4 nach seiner Herstellung, und zwar am Beispiel einer etwas abgewandelten Ausführungsform. Anstelle einer großen Ausnehmung 31 besitzt der Stoßfänger 6 hier eine relativ kleine zylinderförmige Ausnehmung 38, so daß damit der Stoßfänger 6 vergleichsweise fester und stabiler ausgebildet ist. Man sieht an dieser Darstellung der Fig. 3 und Fig. 4 sehr gut auch die Anordnung und Dimensionierung des umlaufenden Randes 37 sowie der Mittelfläche 36, die zusammen die Kontaktfläche 32 bilden. Es versteht sich, daß die Fig. 3 und 4 den unbelasteten, also nicht vorgespannten Zustand des Formkörpers 5 darstellen.

Fig. 5 zeigt den Aufnahmedorn 20 mit dem Innengewinde 28 und dem Gewinde 26 für die Schraube 13 sowie der Anlagefläche 27 für die Distanzhülse 16 (Fig. 6). Die Distanzhülse 16 ist in ihrer Länge auf die im Lagerkörper 7 zu erzielende Vorspannung und unter Anpassung an die Gegebenheiten der Stoßstange 1 bzw. des Kunststoffprofiles 2 abgestimmt.

Fig. 7 zeigt einen Verschlußknopf 39 mit Zapfen 40, der entsprechend dem Innengewinde 28 des Aufnahmedorns 20 ausgebildet ist. Soll das Stoßstangenhorn 4 nur als Stoßfänger fungieren und Scheinwerfer 12 nicht angeordnet werden, dann wird der Verschlußknopf 39 nach Herausnahme der Unterlegscheibe 23 in den Ausnahmedorn 20 eingepresst.

0119367

- 12 -

Bezugszeichenliste:

| | | | |
|---|---|---|---|
| 1 = Stoßstange | 34 = Ausnehmung |
| 2 = Kunststoffprofil | 35 = Steg |
| 3 = Schraube | 36 = Mittelfläche |
| 4 = Stoßstangenhorn | 37 = Rand |
| 5 = Formkörper | 38 = Ausnehmung |
| 6 = Stoßfänger | 39 = Verschlußknopf |
| 7 = Lagerkörper | 40 = Zapfen |
| 8 = Achse | |
| 9 = Trennaht | |
| 10 = Befestigungseinrichtung | |
| 11 = Aufnahmeeinrichtung | |
| 12 = Scheinwerfer | |
| 13 = Schraube | |
| 14 = Schraubenkopf | |
| 15 = Spannscheibe | |
| 16 = Distanzhülse | |
| 17 = Unterlagscheibe | |
| 18 = Mutter | |
| 19 = Gewinde | |
| 20 = Aufnahmedorn | |
| 21 = Gelenkträger | |
| 22 = Sockelschraube | |
| 23 = Unterlegscheibe | |
| 24 = Kontermutter | |
| 25 = Durchbrechung | |
| 26 = Gewinde | |
| 27 = Anlagefläche | |
| 28 = Innengewinde | |
| 29 = Drehachse | |
| 30 = Fuß | |
| 31 = Ausnehmung | |
| 32 = Kontaktfläche | |
| 33 = Deckleiste | |

# BIBRACH & REHBERG

## ANWALTSSOZIETÄT

BIBRACH & REHBERG, POSTFACH 738, D-3400 GÖTTINGEN

PATENTANWALT DIPL.-ING. RUDOLF BIBRACH
PATENTANWALT DIPL.-ING. ELMAR REHBERG

RECHTSANWÄLTIN MICHAELA BIBRACH-BRANDIS

TELEFON: (0551) 45034/35
TELEX: 96616 bipat d

POSTSCHECKKONTO: HANNOVER
(BLZ 25010030) NR. 115763-301

BANKKONTEN: DEUTSCHE BANK AG GÖTTINGEN
(BLZ 26070072) NR. 01/85900
COMMERZBANK GÖTTINGEN
(BLZ 26040030) NR. 6425722

D-3400 GÖTTINGEN,
PÜTTERWEG 6

IHR ZEICHEN
YOUR REF.

IHR SCHREIBEN VOM
YOUR LETTER

UNSER ZEICHEN
OUR REF.
11.382/AS5

WEGU Gummi- und Kunststoffwerke Walter Dräbing KG
Mündener Str. 31, 3500 Kassel

Stoßstangenhorn

## P a t e n t a n s p r ü c h e :

1. Energieaufnehmendes, an der Stoßstange von Kraftfahrzeugen zu befestigendes Stoßstangenhorn, mit einem Stoßfänger aus elastisch-nachgiebigem Material und einer Befestigungseinrichtung für die Verbindung zwischen Stoßstangenhorn und Stoßstange und mit einer Aufnahmeeinrichtung zur Befestigung eines Scheinwerfers, dadurch gekennzeichnet, daß die Aufnahmeeinrichtung (11) mit der Befestigungseinrichtung (10) starr verbunden ist, und daß die Befestigungseinrichtung (10) eine Distanzhülse (16) zum reproduzierbaren Aufbringen einer bestimmten Vorspannung des Stoßstangenhorns (4) zwischen Aufnahmeeinrichtung (11) und Stoßstange (1) aufweist.

2. Stoßstangenhorn nach Anspruch 1, dadurch gekennzeichnet, daß die Befestigungseinrichtung (10) mit der Aufnahmeeinrichtung (11) über ein Gewinde (19, 26) verschraubt ist.

- 2 -

3. Stoßstangenhorn nach Anspruch 1 und 2, dadurch gekennzeichnet, daß die Befestigungseinrichtung (10) durch die Aufnahmeeinrichtung (11) hindurch bis in den Bereich des Stoßfängers (6) verlängert ist und im Bereich dieser Verlängerung eine Spanneinrichtung (14, 15, 20) zum Aufbringen einer stabilisierenden Vorspannung auf den Stoßfänger (6) vorgesehen ist.

4. Stoßstangenhorn nach Anspruch 1, dadurch gekennzeichnet, daß das Stoßstangenhorn (4) auf seiner der Stoßstange (1) zugekehrten Seite eine aus einem umlaufenden, in nicht verspanntem Zustand vorstehenden Rand (37) und einer Mittelfläche (36) gebildete Kontaktfläche (32) aufweist.

5. Stoßstangenhorn nach Anspruch 3, dadurch gekennzeichnet, daß der Stoßfänger (6) im Anschluß an die Spanneinrichtung (14, 15, 20) eine die Eigenschaften des Stoßfängers mitbestimmende Ausnehmung (31, bzw. 38) aufweist.

6. Stoßstangenhorn nach Anspruch 3 und 5, dadurch gekennzeichnet, daß für die Spanneinrichtung (14, 15, 20) und die Befestigungseinrichtung (10) eine gemeinsame durchgehende Schraube (13) vorgesehen ist, deren Schraubenkopf (14) eine den Querschnitt der Ausnehmung (31 bzw. 38) abdeckende Spannscheibe (15) trägt, einen in eine Durchbrechung (25) im Stoßstangehorn (4) eingepressten Aufnahmedorn (20) über das Gewinde (19) durchsetzt und die Distanzhülse (16) durchsetzend sich durch die Stoßstange (1) erstreckt.

7. Stoßstangenhorn nach Anspruch 6, dadurch gekennzeichnet, daß der eingepresste Aufnahmedorn (20) auf seiner der Distanzhülse (16) zugekehrten Seite eine Anlagefläche (27) für die eine Stirnseite der Distanzhülse (16) aufweist.

8. Stoßstangenhorn nach Anspruch 6 und 7, dadurch gekennzeichnet, daß der Aufnahmedorn (20) ein axial angeordnetes Innengewinde (28) zur Aufnahme einer Sockelschraube (22) eines am Scheinwerfer (12) angreifenden Gelenkträgers (21) aufweist.

9. Stoßstangenhorn nach Anspruch 1 bis 8, dadurch gekennzeichnet, daß die Befestigungseinrichtung (10) auf halber Höhe der Kontaktfläche (32) angeordnet ist.

10 Stoßstangenhorn nach Anspruch 1 bis 9, dadurch gekennzeichnet, daß die Form für das Stoßstangenhorn (4) in der Ebene parallel zur Kontaktfläche (32) durch die Achse (8) der Aufnahmeeinrichtung (11) geteilt ist.

0119367

1/2

Fig 1

Fig. 2

2/2

Fig. 3

Fig. 4

Fig. 5

Fig. 6

Fig. 7

Europäisches
Patentamt

**EUROPÄISCHER RECHERCHENBERICHT**

Nummer der Anmeldung

EP  83 71 0063

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| A | DE-B-2 429 860   (KUPSCH) | | B 60 R   19/02 B 60 Q    1/18 |
| | --- | | |
| A | FR-A-1 378 254   (GALEY) | | |
| | --- | | |
| A | DE-A-3 046 305   (BLAUPUNKT) | | |
| | ----- | | |

RECHERCHIERTE
SACHGEBIETE (Int. Cl. ³)

B 60 R
B 60 Q

Der vorliegende Recherchenbericht wurde für alle Patentansprüche erstellt.

| Recherchenort DEN HAAG | Abschlußdatum der Recherche 09-02-1984 | Prüfer PIRIOU J.C. |
|---|---|---|